# EUROPEAN PATENT SPECIFICATION

(11) **EP 2 397 370 B1**
(45) Date of publication and mention of the grant of the patent: **06.03.2013**
(21) Application number: 10425207.7
(22) Date of filing: 17.06.2010
(51) Int. Cl.: B60R 7/06

(54) **Guide for sliding glove box of a vehicle's dashboard**
Führung für ein ausziehbares Handschuhfach
Guidage avec glissières pour receptacle de gants

(43) Date of publication of application: 21.12.2011
(73) Proprietor: Iveco S.p.A., 10156 Torino (IT)
(72) Inventor: Raviola, Claudio, 10040 Rivalta di Torino (IT); Cenna, Claudio, 10144 Torino (IT)
(74) Representative: Borsano, Corrado

(56) References cited:
- DE-A1- 3 816 407
- FR-A1- 2 830 494
- US-A- 6 050 628
- US-A1- 2006 267 364

## Description

### Field of the invention

The present invention relates to a guide for glove box and sliding glove box of a vehicle's dashboard.

### Description of the prior art

Glove compartments in vehicles are known in the art. In general, a compartment is closed by means of a door hinged, in its lower part, to the dashboard of the vehicle and equipped with a lock for blocking the door to the dashboard in closed position.

In order to obtain this type of glove compartment numerous components are necessary, in particular, the door, the lock and a hook complementary the lock to be fixed to the dashboard.

Generally, the lock is one of the more stressed and delicate parts of the door of a glove compartment.

Moreover, a particular precision is required in the assembling of the parts in order to avoid the risk that the lock does not engage the respective hook which keeps the door closed.

Therefore the main technical problem is to reduce the number of components that are necessary to realize a reversible locking of a compartment in a vehicle's dashboard.

A further problem is to simplify the assembling of the components that are necessary to realize a locking of a compartment in a vehicle's dashboard.

US6050628 shows a guide, whose features are in the preamble of claim 1.

### Summary of the invention

The aim of the present invention is to provide a guide for a sliding glove box in a vehicle's dashboard suitable to allow a drastic reduction of the number of components that are necessary to realize a reversible locking of a compartment in a vehicle's dashboard.

The object of the present invention is a guide for a sliding glove box in a vehicle's dashboard, according to claim 1.

A further aim of the present invention is to provide a sliding glove box of a vehicle's dashboard, suitable to solve all the problems set forth above.

A further object of the present invention is a sliding glove box of a vehicle's dashboard, according to claim 7.

A further aim of the present invention is to provide a sliding glove box of a vehicle's dashboard, suitable to solve the problem of reducing the number of components and also the problem of simplifying the assembling of the components of the glove box.

The dependent claims describe the preferred embodiments of the invention, and are an integral part of this description.

### Brief description of the Figures

Further characteristics and advantages of the invention will be more apparent in light of a detailed description of preferred, but non-exclusive, embodiments of glove box guide and sliding glove box of a vehicle's dashboard, shown with the help of the drawings that are attached hereto, which are merely illustrative and not limitative, in which:
Fig. 1 shows an exploded view with parts in transparency of a vehicle's dashboard with respective glove box and sliding guides of the glove box with respect to the dashboard;
Fig. 2 shows a cross section of the sliding guides of figure 1;
Fig. 3 shows a section of one of the sliding guides of the previous figure rotated by 90°;
Figure 4 shows a part of the guide of figure 2.

In the drawings the same reference numbers and letters identify the same elements or components.

### Detailed description of a preferred embodiment of the invention

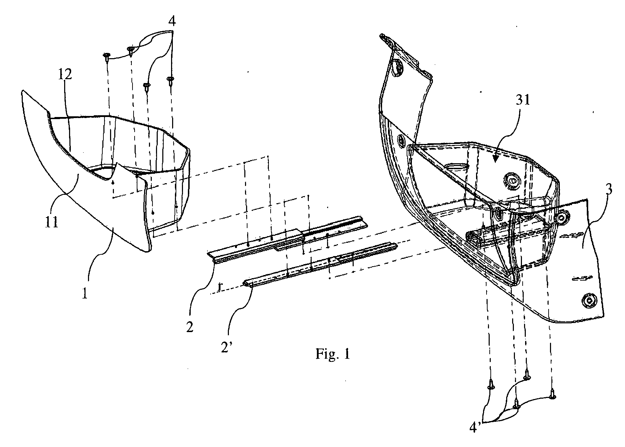

With reference to figure 1, a compartment in a dashboard 3 is realized by means of a glove box 1 of the sliding type, connected to a respective compartment 31 made in the dashboard 3 by means of guides 2.

When the glove box is in a closed position 1, a side 11 of the glove box remains at sight and adheres as a ledge to the dashboard. In a closed position, the glove box slides to the outside of the dashboard 3 by means of said guides 2.

Advantageously, the content of said glove box 1 is easily extracted together with the glove box itself, in order to be easily reached.

Preferably, two parallel guides 2 and 2' connect the glove box 1 to the dashboard 3.

Each one of them comprises two parts: a first part 21 or 21"' is fixed to the dashboard 3, and in particular to the bottom of the compartment 31 made in the dashboard 3; a second part 21' or 21" is connected to the bottom of the glove box 1 from the external part of the glove box or vice versa. The first part slides over the second part according to an axial direction r which is the developing direction of the guide.

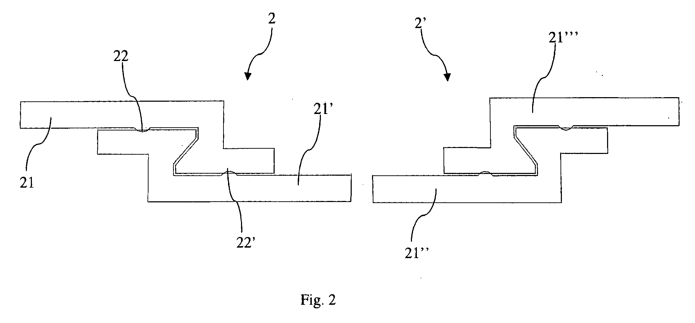

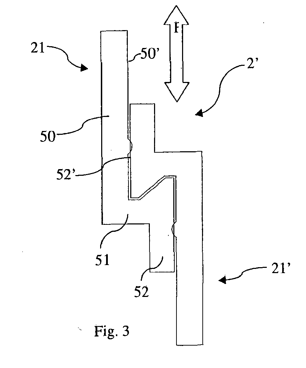

With reference to figure 2, a guide comprises said first 21 and said second part 21', having the same section bar. In particular, with reference to figure 3, said cross section of the section bar is 4-shaped. Figure 3 is obtained by the guide 2' of figure 2 by rotating it by 180° on the plane of the sheet.

Each section bar thus comprises, according to the section of figure 3, a first flat part 50 vertically arranged in the figure, a base 51 connected to an extremity of said first flat part 50 and horizontally arranged in the figure, and a second flat part 52 parallel to said first flat part 50, smaller than said first flat part 50 and connected to said base 51.

A pair of section bars, one of them overturned with respect to the other according to said development axis r, define said guide 2 o 2'.

The shape of each first and second part allows a reciprocal movement according to an axial direction of the guide that is perpendicular to the sheet of figure 3.

It is evident that a second part 21' can move with respect to the first part 21 of the guide according to the arrow F in figure 3.

The section bar of the guides is thus made so that a first segment 21 of the section bar engages a second segment 21' of the same section bar rotated by 180° with respect to an development direction r of the guide, limiting the movement of said first segment to three degrees of freedom with respect to the second one.

The first segment 21 corresponds with said first part of the guide, etc..

With reference to figure 2 a pair of guides 2 and 2' are specularly arranged the one with respect to the other according to a cross section of the guides with respect to said axial development direction r.

The axis of symmetry of the specular arrangement of the guides is perpendicular to said degree of freedom according to arrow F.

Thus, by constraining said first parts to the dashboard and said second parts to the glove box, said reciprocal movement, according to the arrow F, between said first and second part is hindered, allowing the sliding of said first parts 21 on said second parts 21' only according to said axial direction r, which corresponds to the extraction/closing direction of the glove box.

Thus, it is the assembling of the guides with the box and with the respective compartment that keeps together the section bars defining guides 2 e 2'.

Advantageously, the glove box is assembled by using four identical section bars which are arranged according to figure 2 and which are to be connected by means of screws 4 and 4' respectively to the box 1 and to the compartment 31 of the dashboard 3.

In order to avoid that the inertia of the mass of the box or of its content provokes the opening of the box 1 during a vehicle's acceleration or provokes the closing of the box during a vehicle's braking, the contact areas between said first and second part of the guide 2 (or 2') are made rough, in order to increase the friction between the parts. According to figure 3, said first flat part 50 comes into contact with said second flat part 52. In particular an internal surface 50' of said first flat part 50 comes into contact with an external surface 52' of said second flat part. Internal surface refers to the inner surface of said section bar defining said number four, the opposite being valid for the external surface.

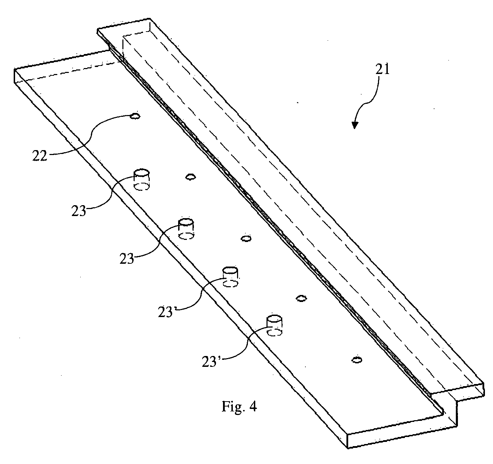

According to a preferred alternative embodiment, see figure 4, said friction is obtained by placing small protrusions 22 and 22' on said internal surface 50' of said first flat part 50. Such protrusions interfere in the sliding of said first part over said second part of the guide.

Preferably said protrusion have an hemispherical shape and are spaced in order to define predefined opening positions of the box.

The section bar is preferably made of metal or of suitably rigid and robust plastic.

Figure 4 also show the holes 23 that will house screws 4 when said section bar will be fixed to the box 1, and the holes 23' that will house screws 4' when said section bar will be fixed to the dashboard 1.

According to the alternative embodiment shown in figure 1, in order to further reduce the number of components, instead of a handle for grabbing the box, said side 11 of the box that is at sight is shaped so that it defines an opening through which it is possible to insert a hand to grab said side 11 from inside the box in order to draw it out of the compartment 31 made in the dashboard 3.

According to further alternative embodiments not shown in the figures, said section bar may be differently shaped, so that two segments of the same section bar may be inserted one in the other only according to an axial direction, so that a segment has only two degrees of freedom with respect to the other. Such alternative embodiments can be realized by the person skilled in the art.

The elements and the characteristics described in the different preferred embodiments may be combined without departing from the scope of the present invention.

## Claims

1. Guide of a sliding glove box of a vehicle's dashboard having a first part (21) being connected to a glove box (1) and a second part (21') being connected to a dashboard (1) wherein the glove box is housed (1), said first part (21) being slidingly connected to said second part (21') according to an axial development direction (r) of the guide, said guide being **characterized in that** it consists of said first part (21) and said second part (21') and **in that** said first part (21) and said second part (21') are realized by means of respectively a first segment and a second segment of the same section bar.

2. Guide according to claim 1, wherein said second segment (21') is disposed overturned with respect to said first segment (21) with respect to said axial development direction (r) and slidingly engaging said first segment (21), maintaining two or three degrees of freedom with respect to said first segment (21).

3. Guide according to one of the previous claims, wherein said section bar has a cross section number 4-shaped.

4. Guide according to claim 3, wherein said section bar comprises a first flat part (50) vertically arranged, a base (51) connected to an extremity of said first flat part (50) and perpendicularly arranged with respect to said first flat part (50), and a second flat part (52) parallel to said first flat part (50), smaller than said first flat part (50) and connected to said base (51).

5. Guide according to claim 2 or 3, wherein an internal surface (50') of said first part (21) of the guide, which comes into contact with an external surface of said second part (21'), is rough.

6. Guide according to claim 5, wherein said internal surface (50') comprises at least a protrusion (22,22') and/or wherein said internal surface (50') belongs to said first flat part (50).

7. Sliding glove box of a vehicle's dashboard comprising a pair of guides (2,2') according to any of the previous claims and a compartment (31) made in a dashboard (3), wherein said first parts (21) of the guides are connected to the box (1) and said second parts of the guides (21') are connected to the compartment (31).

8. Sliding box according to claim 7, wherein said first (21) and second part (21') of a first guide (2) are specularly placed with respect to said first (21) and second part (21') of a second guide (2').

9. Ground vehicle comprising a dashboard (3) and its respecting glove box (1) according to claim 7.

## Patentansprüche

1. Führung für ein ausziehbares Handschuhfach eines Fahrzeugarmaturenbretts mit einem ersten Teil (21), der mit einem Handschuhfach (1) verbunden ist, und einem zweiten Teil (21'), der mit einem Armaturenbrett (1) verbunden ist, in dem das Handschuhfach (1) untergebracht ist, wobei der erste Teil (21) gemäß einer axialen Entwicklungsrichtung (r) der Führung gleitend mit dem zweiten Teil (21') verbunden ist, **dadurch gekennzeichnet, dass** sie aus dem ersten Teil (21) und dem zweiten Teil (21') besteht und dass der erste Teil (21) und der zweite Teil (21') durch ein erstes Segment bzw. ein zweites Segment desselben Profileisens verwirklicht sind.

2. Führung nach Anspruch 1, wobei das zweite Segment (21') bezüglich des ersten Segments (21) bezüglich der axialen Entwicklungsrichtung (r) umgekehrt angeordnet ist und das erste Segment (21) gleitend in Eingriff nimmt und zwei oder drei Freiheitsgrade bezüglich des ersten Segments (21) aufrechterhält.

3. Führung nach einem der vorhergehenden Ansprüche, wobei der Querschnitt des Profileisens die Form einer Vier hat.

4. Führung nach Anspruch 3, wobei das Profileisen einen ersten vertikal angeordneten flachen Teil (50), eine Basis (51), die mit einem Ende des ersten flachen Teils (50) verbunden ist und bezüglich des ersten flachen Teils (50) senkrecht angeordnet ist, und einen zweiten flachen Teil (52) umfasst, der parallel zum ersten flachen Teil (50) verläuft, kleiner als der erste flache Teil (50) ist und mit der Basis (51) verbunden ist.

5. Führung nach Anspruch 2 oder 3, wobei eine innere Oberfläche (50') des ersten Teils (21) der Führung, die mit einer äußeren Oberfläche des zweiten Teils (21') in Kontakt kommt, rau ist.

6. Führung nach Anspruch 5, wobei die innere Oberfläche (50') mindestens einen Vorsprung (22, 22') umfasst und/oder wobei die innere Oberfläche (50') zu dem ersten flachen Teil (50) gehört.

7. Ausziehbares Handschuhfach eines Fahrzeugarmaturenbretts mit einem Paar Führungen (2, 2') nach einem der vorhergehenden Ansprüche und einem Abteil (31), das in einem Armaturenbrett (3) hergestellt ist, wobei die ersten Teile (21) der Führungen mit dem Fach (1) verbunden sind und die zweiten Teile der Führungen (21') mit dem Abteil (31) verbunden sind.

8. Ausziehbares Handschuhfach nach Anspruch 7, wobei der erste (21) und der zweite Teil (21') einer ersten Führung (2) spiegelbildlich zu dem ersten (21) und dem zweiten Teil (21') einer zweiten Führung (2') platziert sind.

9. Bodenfahrzeug mit einem Armaturenbrett (3) und seinem jeweiligen Handschuhfach (1) nach Anspruch 7.

## Revendications

1. Guide d'une boîte à gants coulissante d'un tableau de bord de véhicule ayant une première partie (21) raccordée à une boîte à gants (1) et une seconde partie (21') raccordée à un tableau de bord (1), dans lequel la boîte à gants est logée (1), ladite première partie (21) étant raccordée de façon coulissante à ladite seconde partie (21') selon une direction de développement axiale (r) du guide, ledit guide étant **caractérisé en ce qu'**il consiste en ladite première partie (21) et ladite seconde partie (21') et **en ce que** ladite première partie (21) et ladite seconde partie (21') sont réalisées au moyen respectivement d'un premier segment et d'un second segment de la même barre de section.

2. Guide selon la revendication 1, dans lequel ledit second segment (21') est disposé à l'envers par rapport audit premier segment (21) par rapport à ladite direction de développement axial (r) et mettant en prise de façon coulissante ledit premier segment (21), maintenant deux ou trois degrés de liberté par rapport audit premier segment (21).

3. Guide selon l'une des revendications précédentes, dans lequel ladite barre de section a une section en forme du chiffre 4.

4. Guide selon la revendication 3, dans lequel ladite barre de section comprend une première partie plate (50) agencée verticalement, une base (51) raccordée à une extrémité de ladite première partie plate (50) et agencée perpendiculairement par rapport à ladite première partie plate (50), et une seconde partie plate (52) parallèle à ladite première partie plate (50), plus petite que ladite première partie plate (50) et raccordée à ladite base (51).

5. Guide selon la revendication 2 ou 3, dans lequel une surface interne (50') de ladite première partie (21) du guide, qui vient en contact avec une surface externe de ladite seconde partie (21') est rugueuse.

6. Guide selon la revendication 5, dans lequel ladite surface interne (50') comprend au moins une protubérance (22, 22') et/ou dans lequel ladite surface interne (50') appartient à ladite première partie plate (50).

7. Boîte à gants coulissante d'un tableau de bord de véhicule comprenant une paire de guides (2, 2') selon l'une quelconque des revendications précédentes et un compartiment (31) réalisé dans un tableau de bord (3), dans laquelle lesdites premières parties (21) des guides sont raccordées à la boîte (1) et lesdites secondes parties des guides (21') sont raccordées au compartiment (31).

8. Boîte à gants coulissante selon la revendication 7, dans laquelle lesdites première (21) et seconde (21') parties d'un premier guide (2) sont placées de façon spéculaire par rapport auxdites première (21) et seconde (21') parties d'un second guide (2' ) .

9. Véhicule terrestre comprenant un tableau de bord (3) et sa boîte à gants (1) respective selon la revendication 7.
